## Europäisches Patentamt
## European Patent Office
## Office européen des brevets

(19)

(11) Veröffentlichungsnummer: **0 026 355**
**B1**

(12)

# EUROPÄISCHE PATENTSCHRIFT

(45) Veröffentlichungstag der Patentschrift: **13.06.84**

(21) Anmeldenummer: **80105299.4**

(22) Anmeldetag: **04.09.80**

(51) Int. Cl.³: **H 02 H 1/06,** H 02 H 3/16, H 02 H 3/34, H 02 M 7/04

(54) Schaltungsanordnung für mehrpolige Fehlerstromschutzschalter.

(30) Priorität: **20.09.79 DE 2938124**

(43) Veröffentlichungstag der Anmeldung: **08.04.81 Patentblatt 81/14**

(45) Bekanntmachung des Hinweises auf die Patenterteilung: **13.06.84 Patentblatt 84/24**

(84) Benannte Vertragsstaaten: **AT FR GB IT NL**

(56) Entgegenhaltungen: **DE - A - 2 825 881** **DE - B - 2 653 453**

(73) Patentinhaber: **SIEMENS AKTIENGESELLSCHAFT Berlin und München Wittelsbacherplatz 2 D-8000 München 2 (DE)**

(72) Erfinder: **Westermayer, Rudolf, Dipl.-Ing. Rennweg 4g D-8400 Regensburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Schaltungsanordnung für mehrpolige Fehlerstromschutzschalter gemäß dem ersten Teil des Anspruches 1.

Eine bekannte Schaltungsanordnung dieser Art arbeitet mit zwei Gleichrichterstrecken für jeden Netzleiter, so daß insgesamt bei drei Außenleitern — früher als Phasenleiter bezeichnet — und einem Neutralleiter — früher als Mittelpunktleiter bezeichnet — acht Gleichrichterstrecken benötigt werden (DE—B2—2653 453). Die Gleichrichterstrecken sind in Brückenschaltung angeordnet und an ihren Verbindungspunkten läßt sich die Hilfsspannung abgreifen.

Es ist ferner eine Erdleckdetektionsvorrichtung bekannt (DE—A1—28 25 881), wonach Ausführungsbeispielen zufolge in eine Brückenanordnung von Gleichrichterstrecken zusätzlich eine Hilfserde eingekoppelt wird. Diese Hilfserde übernimmt bei einem Nulleiterbruch, wenn über die Last bei einphasigem Betrieb am zweiten Betriebspol ein von Null verschiedenes Potential ansteht, die Funktion des zweiten Betriebspols. Bei mehrphasiger Ausbildung der bekannten Vorrichtung wird eine Schaltung erreicht, die der zuvor geschilderten im wesentlichen entspricht, bei der aber eine zusätzliche Hilfserde, also unabhängig von einem Netz, eingekoppelt wird.

Die bekannten mehrpoligen Schaltungsanordnungen liefern einem zu versorgenden Gerät die Hilfsspannung solange zwei von vier Leitern intakt sind. Die Gleichrichterstrecken sind jedoch, wirtschaftlich gesehen, verhältnismäßig aufwendige Bauteile.

Der Erfindung liegt die Aufgabe zugrunde, eine Schaltungsanordnung zur sicheren Versorgung von Fehlerstromschutzschaltern, die mit einer Hilfsspannung arbeiten, zu entwickeln, die mit weniger als acht Gleichrichterstrecken auskommt.

Diese Aufgabe wird erfindungsgemäß durch die kumzeichnenden Merkmale des Anspruches 1 gelöst. Mit einer solchen Schaltungsanordnung wird eine Hilfsspannung für einen Fehlerstromschutzschalter auch dann noch sichergestellt, wenn lediglich oder mindestens zwei von vier Leitern noch an Netzspannung liegen.

Der Strombedarf in der Hilfsversorgung eines elektronisch arbeitenden Fehlerstromschutzschalters liegt in der Regel unterhalb von 2 mA und die Spannung ist von Netzspannungswerten herunterzutransformieren. Hierzu können zwischen den Gleichrichterstrecken und netzseitigen Anschlußstellen bei den Außenleitern Widerstände eingeschaltet sein. Eine Ausgestaltung der Schaltungsanordnung kann dabei zur Steuerung des Potentials zwischen dem Neutralleiter und den Verbindungspunkten Kondensatoren enthalten.

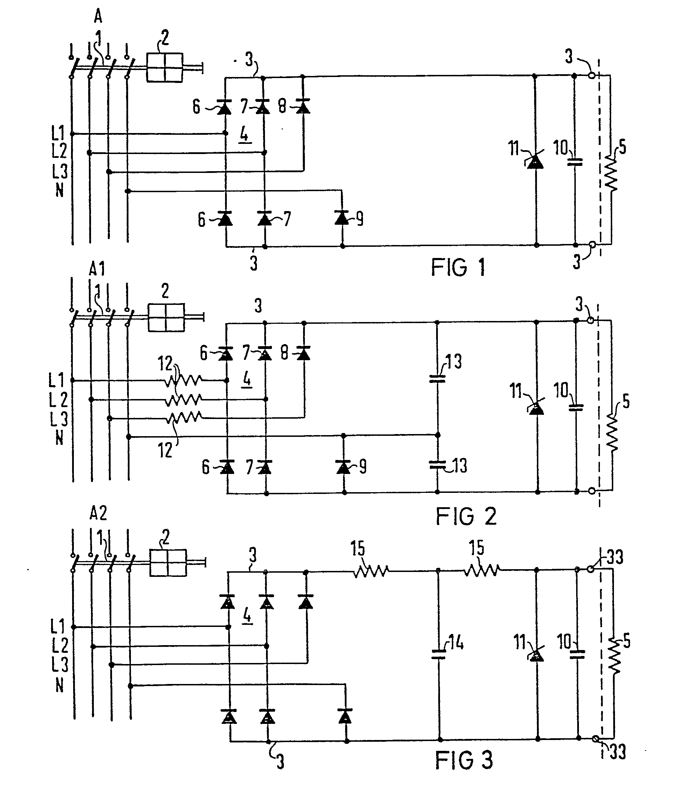

Nach einer anderen Ausgestaltung wird zwischen den Verbindungspunkten ein Kondensator eingeschaltet und zwischen einem Verbindungspunkt und dem zugeordneten Ausgang der Schaltungsanordnung zumindest ein Widerstand. Der Kondensator kann mit zwei Widerständen insbesondere eine T-Schaltung bilden (Fig. 3).

Die Erfindung soll anhand von in der Zeichnung schematisch wiedergegebenen Ausführungsbeispielen näher erläutert werden:

In Figur 1 ist das Grundprinzip der Schaltungsanordnung veranschaulicht.

In Figur 2 ist eine Ausgestaltung der Schaltungsanordnung nach Figur 1 wiedergegeben.

In Figur 3 ist eine andere Ausgestaltung der Schaltungsanordnung nach Figur 1 dargestellt.

Die Schaltungsanordnung nach Figur 1 ist an vier zu überwachenden Leitern L1, L2, L3 und N angeschlossen. Sie liefert die Hilfsenergie für den Betrieb eines Fehlerstromschutzschalters. In den zu überwachenden Leitern sind Schaltkontakte 1 angeordnet, auf die ein Schaltschloß 2 einwirkt. Dieses Schaltschloß 2 ist in einem Fehlerstromschutzschalter untergebracht vorzustellen, durch den die zu überwachenden Leiter hindurchgeführt sind und der für seinen Betrieb eine Hilfsspannung benötigt. Die Hilfsspannung wird an den Verbindungspunkten 3 einer Brückenschaltung 4 abgegeben. Die Hilfsspannung arbeitet auf einen im Fehlerstromschutzschalter angeordnet vorzustellenden Verbraucher 5.

Zwei Gleichrichterstrecken 6 und zwei Gleichrichterstrecken 7 zu zwei Leitern, im Ausführungsbeispiel die Leiter L1 und L2, sind in Brückenschaltung 4 angeordnet. Mit den Verbindungspunkten 3 der Brückenschaltung 4 ist jeweils eine einzelne Gleichrichterstrecke 8 bzw. 9 der übrigen Leiter im Ausführungsbeispiel Leiter L3 and Neutralleiter N, verbunden. An den Verbindungspunkten 3 der Brückenschaltung 4 ist die Hilfsspannung abgreifbar. Zwischen den Verbindungspunkten können übliche Glättungsmittel, im Ausführungsbeispiel ein Kondensator 10 und ein oberhalb einer Schwellspannung arbeitendes Ventil 11, z. B. eine Zenerdiode, angeordnet sein.

Auf der Netzseite der Schaltungsanordnung können Vorwiderstände angeordnet werden, um die Spannung für den Verbraucher 5 herunterzusetzen. Solche Vorwiderstände 12 sind in Figur 2 dargestellt. Außerdem sind zwischen dem Neutralleiter N und den Verbindungspunkten 3 Kondensatoren 13 zur Steuerung des Potentials der Ausgänge angeordnet, von denen einer oder auch beide entfallen können.

In der Schaltungsanordnung nach Figur 3 ist zwischen den Verbindungspunkten 3 ein Kondensator 14 eingeschaltet, und zwischen einem Verbindungspunkt und dem zugeordneten Ausgang 33 der Schaltungsanordnung sind zwei Widerstände 15 angeordnet, um die Spannung am Ausgang 33 herabzusetzen. Einer

der Widerstände 15 sowie der Kondensator 14 können für die prinzipielle Arbeitsweise entfallen.

**Patentansprüche**

1. Schaltungsanordnung für mehrpolige Fehlerstromschutzschalter, die mit einer über Gleichrichterstrecken (6, 7, 8, 9) abgeleiteten Hilfsspannung arbeiten, wobei jeweils zwei Gleichrichterstrecken (6, 7) zu zwei Netzleitern aus L1, L2, L3, N) bestehend aus Außenleitern (L1, L2, L3) und Neutralleiter (N), in Brückenschaltung (4) angeordnet sind dadurch gekennzeichnet, daß mit den Verbindungspunkten (3) der Brückenschaltung jeweils eine einzelne Gleichrichterstrecke (8, 9) für jedem der übrigen Netzleiter verbunden ist und daß an den Verbindungspunkten (3) oder diesen nachgeschalteten Stellen (33) die Hilfsspannung abgreifbar ist.

2. Schaltungsanordnung nach Anspruch 1, dadurch gekennzeichnet, daß zwischen den Gleichrichterstrecken (6, 7, 8) und netzseitigen Anschlußstellen bei den Außenleitern (L1, L2, L3) Widerstände (12) eingeschaltet sind.

3. Schaltungsanordnung nach Anspruch 1 oder 2, dadurch gekennzeichnet, daß zwischen dem Neutralleiter (N) und den Verbindungspunkten (3) Kondensatoren (13) angeordnet sind.

4. Schaltungsanordnung nach Anspruch 1, dadurch gekennzeichnet, daß zwischen den Verbindungspunkten (3) ein Kondensator (14) eingeschaltet ist und daß zwischen einem Verbindungspunkt (3) und dem zugeordneten Ausgang (33) der Schaltungsanordnung zumindest ein Widerstand (15) angeordnet ist.

**Revendications**

1. Montage pour des disjoncteurs multipolaires de courant de fuite, qui opèrent avec une tension auxiliaire obtenue par l'intermédiaire de voies redresseuses (6, 7, 8, 9), parmi lesquelles deux voies redresseuses (6, 7) reliées à deux conducteurs du réseau (incluant L1, L2, L3, N), constitués par des conducteurs extérieurs (L1, L2, L3) et un conducteur neutre (N), sont branchées dans un circuit en pont (4), caractérisé par le fait qu'une voie redresseuse individuelle (8, 9) pour chacun des autres conducteurs de réseau est reliée aux points de jonction (3) du circuit en pont et que la tension auxiliaire peut être prélevée au niveau des points de jonction (3) ou au niveau de points (33) branchés en aval de ces points.

2. Montage suivant le revendication 1, caractérisé par le fait que des résistances (12) sont branchées entre les voies redresseuses (6, 7, 8) et des points de raccordement, situé du côté réseau dans le cas des conducteurs extérieurs (L1, L2, L3).

3. Montage suivant la revendication 1 ou 2, caractérisé par le fait que des condensateurs (13) sont disposés entre le conducteur neutre (N) et les points de jonction (3).

4. Montage suivant la revendication 1, caractérisé par le fait qu'un condensateur (14) est branché entre les points de jonction (3) et qu'au moins une résistance (15) est montée entre un point de jonction (3) et la sortie associée (33) du montage.

**Claims**

1. Circuit for multipole earth leakage circuit breakers which operate with an auxiliary voltage derived via rectifier sections (6, 7, 8, 9), each two rectifier sections (6, 7) being associated with two mains conductors (from L1, L2, L3, N), comprising the phase conductors (L1, L2, L3) and the neutral conductor (N), in a bridge circuit configuration (4), characterised in that one of a single rectifier section (8, 9) is connected to the junction points (3) of the bridge circuit for each of the remaining mains conductor and that the auxiliary voltage can be tapped off from the said junction points (3) or places (33) disposed downstream thereof.

2. Circuit according to claim 1, characterised in that the resistors (12) are connected between the rectifier sections (6, 7, 8) and the mains side connecting points of the phase conductors (L1, L1, L3).

3. Circuit according to claim 1 or 2, characterised in that capacitors (13) are disposed between the neutral conductor (N) and the junction points (3).

4. Circuit according to claim 1, characterised in that a capacitor (14) is connected between the junction points (3) and that at least one resistor (15) is disposed between a junction point (3) and the associated output (33) of the circuit.

FIG 1

FIG 2

FIG 3